# EUROPEAN PATENT APPLICATION

(11) **EP 1 903 463 A1**
(43) Date of publication of application: **26.03.2008**
(21) Application number: 06019812.4
(22) Date of filing: 21.09.2006
(51) Int. Cl.: G06F 21/00

(54) **Method and entity for protected distribution of data**

(71) Applicant: Nokia Siemens Networks GmbH & Co. KG, 81541 München (DE); Fraunhofer-Gesellschaft zur Förderung der angewandten Forschung e.V., 80686 München (DE)
(72) Inventor: Kuntze, Nicolai, 64293 Darmstadt (DE); Marhöfer, Michael, Dr., 82041 Deisenhofen (DE); Schmidt, Andreas, Dr., 65929 Frankfurt am Main (DE)
(74) Representative: Schubert, Helmut

(57) **Abstract**

The invention relates to the problems of distributing any kind of data, such as messages, software sources and other data files (also called "data blobs"), to user devices, especially mobile devices, in a secured way.

The invention comprises a method for protected distribution of data on a device using a trusted key mechanism, wherein the distributed data can only be decrypted by the device if the device is in a certain predefined state, or in one out of a set of predefined states of the device.

## Description

### Background of the Invention

The invention relates to the problems of distributing any kind of data, such as messages, software sources and other data files (also called "data blobs"), to user devices, especially mobile devices, in a secured way.

The evolution of user devices has brought about new security requirements. In the past most devices were closed, i. e. there were no open interfaces. The interaction with other devices was governed by the device capabilities as fixed by the device's producer. Since device production was usually assumed by companies with well-established relations with mobile network operators there were no security issues related to the device's functioning. The situation changed at the latest as smart-phones were introduced into the market. This new generation of mobile phones allows for enhancing device functions via open interfaces. New software components can be loaded and installed on the device. Hence, manipulations of device functions are possible. Device security has become an issue.

Protected distribution of data to e. g. mobile devices raises certain problems which can be grouped in two main concerns. First, data has to be protected on the way to the device. During the transport one main concern is the confidentiality of the data to preventing eavesdropping attacks. Second, after the data is transferred to the device the data has to be protected against unauthorized access.
This basic problem arisies for instance in recent use cases like e-mail push services, but also in ordinary e-mail delivery services, message delivery as in SMS or MMS, and various kind of data synchronization processes between a central data base and a mobile device.

Current approaches to tackle the described problem are using mostly software tokens e. g. PKCS#7 (Public Key Cryptography Standards, Cryptographic Message Syntax Standard, RFC 2315) for the storage of the credentials used on the transport and for the storage. All software solutions suffer from the drawback that an attacker can extract the keys from memory during the encryption or decryption of a data block. Smart cards are one approach to this problem but in the mobile domain no standard has managed to become prevalent.

Trusted computing is one approach which exists already in the Internet World. The Trusted Computing Group is a standards organization and was formed in 2003 to develop and support open industry specifications for trusted computing across multiple platform types. It develops and promotes open, vendor-neutral, industry standard specifications for trusted computing building blocks and software interfaces across multiple platforms. Specifications of the Trusted Computing Group can be found on their website, e. g. the Trusted Platform Module (TPM) Main - Part 1 Design Principles, Version 1.2 29 March 2006, which explains basic concepts of the TPM and gives generic information relative to TPM functionality.

Trusted computing (TC) is now also entering the mobile domain with the aim to provide a standardized security infrastructure. So far, no specifications exist, only first use cases were defined in 2005 by the Mobile Phone Working Group MPWG: Use Case Scenarios V 2.7. This document has been written to guide current and further technical specifications work within the MPWG. Another overview can be found in "Trusted Computing in Mobile Platforms", by Evgenia Pisko, Kai Rannenberg and Heiko Roßnagel (DuD - Datenschutz und Datensicherheit 29, 2005). The article shows what so far is missing, especially the availability of standardization results for public view. One main benefit is the ability of the trusted platform module to create, store, and use key pairs. A second important feature is the ability to provide platform configuration registers (PCR) which allow an assertion about the system state and the integrity of the system.

It is an object of the invention to offer a new method for protected distribution of data to a device in the mobile world.
It is further an object of the invention to overcome all the disadvantages of the known methods.
A further objective of the invention is to offer a digital rights mechanism for distributed data on a device.

### Description of the invention

The invention comprises a method for protected distribution of data on a device using a trusted key mechanism, wherein the distributed data can only be decrypted by the device if the device is in a certain predefined state, or in one out of a set of predefined states of the device.

Further objects, advantages and novel features of the invention will be set forth in part in the description which follows an in part will become apparent to those skilled in the art upon examination of the following or may be learned by practice of the invention. The objects and advantages of the invention may be realized and attained by means of the instrumentalities and combinations particularly pointed out in the appended claims.

Public key mechanisms allow users to communicate securely without having prior access to a shared secret key. This is done by using a pair of cryptographic keys, designated as public key and private key, which are related mathematically.

In public key cryptography, the private key is kept secret, while the public key may be widely distributed.
One of the most popular public key cryptography algorithm is RSA but others are known to those skilled in the art.

The method may comprise a trusted platform module in the device, in particular a microcontroller chip. A Trusted Platform Module offers facilities for secure generation of cryptographic keys, the abilities to limit the use of keys (to either signing / verification or encryption / decryption), as well as a hardware Random Number Generator.

The trusted key may be issued to the device or the trusted platform module (TPM) respectively only once before initialization of the device or delivery of the device to the customer. This is a possibility for a network operator to preset a device and reduce the functions offered by the manufacturer to a subset, for example extra low priced offers.

The trusted key may alternatively be reissued to the device or the trusted platform module or substituted in the device or the trusted platform module when necessary, in particular after a certain amount of time. This may be a question of licensing or the possibility of the user to enhance or downgrade the featureset of the device after initial issue.

The indication of the binding of the trusted key to a defined state may be delivered together with the trusted key within a further data field of the protocol unit.
This indication of the binding of the trusted key to a defined state can further more be contained in a trusted computing platform configuration register PCR standardized by the Trusted Computing Group.

The invention concept below may rely on and uses Trusted Computing TC in essential ways.

Trusted computing offers a mechanism to seal pieces of data ("blobs") to a certain PCR (Platform Configuration Register) value. In consequence this data blob is only accessible if the platform is in this state which is associated with the respective PCR value. A basic scenario based on this mechanism exchanges the data between a data source and a mobile device.

### Description of the drawings

Figure 1 shows a scenario based on data blob sealing,
Figure 2 shows a second scenario based on key sealing.

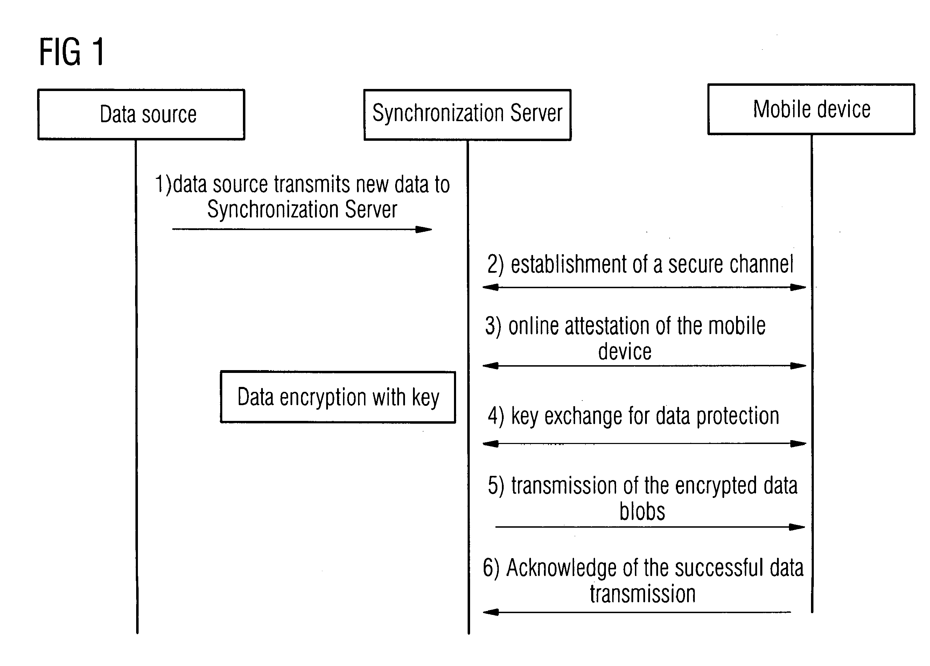

Figure 1 exemplifies the required protocol between the roles of a potential uses case. The data source, Data Source, e. g. a mail server or SMS server or other data server, receives new data which are to be synchronized with the mobile device. Step 1 signals to the synchronization server which controls the synchronization process. This can be implemented as a push which means that the data source signals the synchronization server or as a pull scheme where the synchronization server periodically polls the data source for new data.
The synchronization server has basically the tasks to locate the mobile device, to establish a communication and control the process of data synchronization. The present invention is only concerned with the security of the data exchange. There are various protocols available standardizing the synchronization process e. g. OMA data synchronization (OMA DS).

In step 2 of Figure 1 a secure channel between the synchronization server and the mobile device is established. This can be performed by using known protocols as Transport Layer Security (TLS). After this in step 3 an attestation of the platform is required to testify the mobile device and to proof the integrity of the platform. This is required as the following steps are only to be considered trustworthy if the platform is trustworthy.

Step 4 performs a key exchange so that the data can be encrypted as well independently of the secure channel. This step is optional if the secure channel is strong enough and considered reliable. After this, the data is transferred to the mobile device (step 5). The device receives the data and stores them in sealed data blobs as it is standardized by the Trusted Computing Group (TCG) in the document "TPM Main Part1 Design Principles" chapter 12. As the result of this action the data is only accessible in the chosen state of the device.

This basic approach suffers from the drawback of a high latency produced by the steps 2-4. Especially the attestation process creates a high computational load and produces some traffic. A solution to this problem is a public/private key scheme. In a second embodiment the base concept is refined accordingly.

The synchronization server encrypts the data with a public key. The usage of the corresponding private key should be restricted by a PCR value as it is known from the first scenario. Granting trust in this public key the synchronization server requires a certificate issued by the particular TPM or a third party stating that this public key corresponds to a private key both created by a valid TPM on a trusted platform. Also it is required that the particular PCR value is enclosed in this certificate. This concept is similar to attestation identity keys (AIKs) which are used in TC for platform attestation. The AIK privacy CA which certifies these platform keys can be used here to issue certificates enhanced by the information of the PCR value. This variant of an AIK is further called a sealing key. In contrast to an AIK its aim is not to provide pseudonymity but to provide a way to encrypt data at the side of the sender which can only be used in a predefined state on the receiver side.

This feature can now also be used to establish a lightweight DRM mechanism. By requiring a certain PCR value the activity of a certain application on side of the device can be enforced. In the example of an e-mail push service the presence of an e-mail application is required in a certain configuration and a well defined environment.

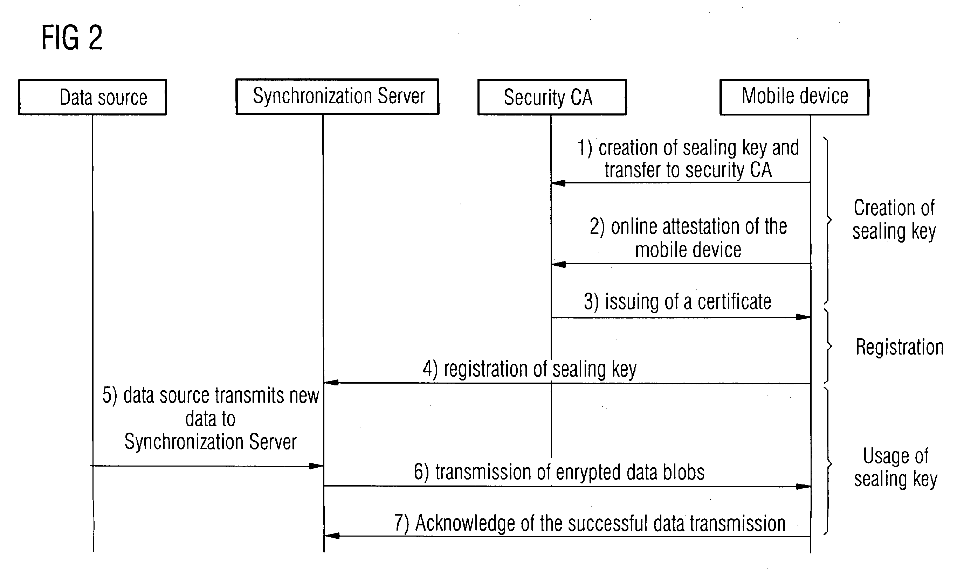

An exemplary top-level protocol for creation and usage of sealing keys is presented in Figure 2. The data source again offers (by either push or pull) new data. The protocol is parted in three stages. Stage 1 is concerned with the key creation and the issuing of the certificate. In stage 2 the key is registered at the side of the synchronization server. In the final stage the key is used for its purpose.

Step 1 (from stage 1) transmits the public portion of a key pair from the device to the security Certificate Authority CA. Additionally several other certificates are transmitted as described by the creation process for a certificate of an AIK by the TCG. In the following step 2 an online attestation is performed which assures the status of the mobile device and extracts the actual PCR values. Using this value a certificate is created stating that the key originates from a trusted platform and that it is only available if and only if the platform equals a certain state. This certificate is transmitted in step 3 to the mobile device.

Step 4 describes that the sealing key and the corresponding certificate are transmitted to the synchronization server. Herein it is necessary to register this data for a certain user, this process is dependant on the particular use case. Steps 1 to 4 only can be either performed once during the roll out of the device or the take ownership of the device by the user or several times during the usage interval of the device.

Step 5 shows that the data is transmitted to the synchronization server introduced in the base concept above. The synchronization server can now encrypt the data with the sealing key or with a hybrid encryption scheme based on this key. A previous key exchange is not required. As the key is bound to a certain state it is also not required to check if the device is in this state as the device nor any other entity can reveal the content of the data. This happens in the step 5 and 6.

Implementing this sealed key is necessary to extend the functionality of the TPM which is the root of trust in the concept of trusted computing. Most of the protocols are already available and used in the standardization. Signaling the binding of a key to a certain PCR value should advantageously be signaled in the respective certificate. This can be done by a flag stating that it is bound to a value and by an additional, optional field where the PCR value and a platform type identifier are stored. This identifier should allow the synchronization server to receive the platform configuration of this device. This can be the reference log provided from e. g. the manufacturer or by the security CA. This log is essential for the synchronization server to decide if the device is trustworthy or not.

The presented solutions provide both a feasible way to synchronize data and to transport them from one entity to another. As shown the second use case, one can reduce the computational costs for the server and the device as some of the steps from the first implementation variant are not required and therefore can be omitted.
These presented methods represent a strong base for a lightweight DRM system based on slightly enhanced TC. Certain data can only be decoded and used if the device is trustworthy.

It is to be understood that both the foregoing general description and the following detailed description are exemplary and explanatory and are intended to provide further explanation of the invention as claimed.

## Claims

1. Method for protected distribution of data on a device (Mobile Device) using a trusted key mechanism, wherein the ability of the trusted key used by the device to decrypt the distributed data is bound to at least one defined state of the device during decryption.

2. The method of claim 1,
wherein the trusted key mechanism is a public key mechanism.

3. The method of claim 1 or 2,
wherein the method comprises a trusted platform module in the device, in particular a microcontroller chip (TPM).

4. The method of one of claims 1 to 3,
wherein the trusted key is preissued to the device or the trusted platform module (TPM) respectively only once.

5. The method of one of claims 1 to 3,
wherein the trusted key is reissued to the device or the trusted platform module or substituted in the device or the trusted platform module when necessary, in particular after a certain amount of time.

6. The method of one of claims 1 to 5,
wherein the indication of the binding of the trusted key to a defined state is delivered together with the trusted key.

7. The method of one of claims 1 to 6,
wherein the indication of the binding of the trusted key to a defined state is delivered as a trusted computing platform configuration register.

8. An entity for protected distribution of data on a device with means for receiving a trusted key and means for storing that trusted key and means for analysis of the key and extracting information about a required state of the device for allowing the conduction of a decryption procedure of the received distributed data with the trusted key.

9. An entity for protected distribution of data on a device of claim 8 for the conduction of one of the methods of claims 1 to 7.
